# FASCICULE DE BREVET EUROPEEN

(11) **EP 3 277 985 B1**
(45) Date de publication et mention de la délivrance du brevet: **17.03.2021**
(21) Numéro de dépôt: 16718419.1
(22) Date de dépôt: 25.03.2016
(51) Int. Cl.: F16H 59/62, B60H 1/32, B60W 10/10, B60W 10/30, B60W 30/188, F16H 59/64, F16H 61/02

(54) **PROCEDE DE COMMANDE D'UNE TRANSMISSION DE VEHICULE AUTOMOBILE**
VERFAHREN ZUR STEUERUNG EINES KRAFTFAHRZEUGGETRIEBES
METHOD FOR CONTROLLING A MOTOR VEHICLE TRANSMISSION

(30) Priorité: 02.04.2015 FR 1552866
(43) Date de publication de la demande: 07.02.2018
(73) Titulaire: PSA Automobiles SA, 78300 Poissy (FR)
(72) Inventeur: BEAUVILLAIN, Alexis, 91300 Massy (FR)
(86) Numéro de dépôt international: PCT/FR2016/050679
(87) Numéro de publication internationale: WO 2016/156716

(56) Documents cités:
- DE-A1- 4 329 978
- FR-A1- 2 852 072
- GB-A- 2 450 344
- US-A1- 2015 066 292

## Description

La présente invention porte sur un procédé de commande d'une transmission de véhicule automobile.

On connait des véhicules comportant un moteur thermique entraînant des roues par une chaîne de transmission pilotée, telle qu'une boîte de vitesses automatique (BVA), une boîte de vitesses mécanique pilotée (BVMP), ou une transmission à variation continue (CVT). Les changements de rapports sont définis par des lois de passage de changements de rapport montants et descendants. Un procédé de commande d'une transmission de véhicule comportant un moteur thermique et des accessoires prélevant un couple audit moteur thermique est connu du document FR 2 852 072.

Lorsque le véhicule fonctionne dans des situations de vie à forte contrainte environnementale, comme par exemple sous de fortes chaleurs ou en haute altitude, dans lesquelles la quantité d'oxygène dans l'air s'appauvrit, le moteur thermique ne permet plus de fournir le couple souhaité au conducteur dans les plages de faible régime, en sorte que le véhicule perd de son dynamisme.

L'invention vise à remédier efficacement à cet inconvénient en proposant un procédé de commande d'une transmission de véhicule automobile comportant:
- un moteur thermique entraînant des roues dudit véhicule par une chaîne de transmission pilotée, et
- des accessoires prélevant un couple audit moteur thermique,
tel que ledit procédé comporte:
- une étape de délestage d'au moins une partie d'un couple prélevé par lesdits accessoires lors d'un fonctionnement dans une situation de vie à forte contrainte environnementale, et
- une étape de décalage de courbes de loi de changement de rapport vers des régimes supérieurs aux régimes des courbes de loi de changement de rapport appliquées dans une situation de vie normale dudit véhicule automobile.

L'invention permet ainsi de conférer du dynamisme au véhicule dans des situations de vie de véhicule à forte contrainte environnementale, tout en fournissant une puissance importante aux accessoires de manière à compenser l'impact négatif des délestages en couple sur les régimes faibles.

La solution de l'invention permet d'avoir une grande rapidité de convergence en couple tout en respectant la consigne de production des accessoires : on obtient le couple voulu, sans sacrifier les prestations offertes aux passagers, comme leur confort thermique (en maintenant l'effort de climatisation par exemple), et ceci en « dépensant » le strict nécessaire en énergie, avec un décalage des courbes de loi vers des régimes supérieurs qui se fait de façon dynamique, à niveau de contrainte donné.

En effet, de façon connue, si on compare le couple demandé par le conducteur sommé des couples de pertes et des couples accessoire (par exemple, une contrainte de type forte altitude et une consigne de climatisation) au couple disponible compte tenu de la dilatation de l'air, quand le couple demandé dépasse le couple disponible, la boîte de vitesse rétrograde automatiquement pour augmenter le régime et le potentiel de couple maximal. Par contre, ce faisant, si le couple demandé par le conducteur est bien satisfait, la puissance consommée par les accessoires (climatisation par exemple) augmente drastiquement avec le régime, augmentant par là même le niveau de prestation du confort thermique et de la production d'électricité, la stratégie produisant plus que ce que demande le conducteur. C'est ce levier qu'utilise la présente invention, pour permettre le délestage de la climatisation et de l'alternateur, et ainsi permettre une dynamique plus rapide de satisfaction du couple, avec une réduction de la consommation en carburant, et ceci à iso-prestation vis-à-vis de la climatisation et de l'alternateur.

Selon une mise en œuvre, l'étape de délestage est mise en œuvre dans une plage de faible régime lorsqu'un couple demandé par un conducteur est supérieur à un couple disponible pour assurer une traction dudit véhicule automobile.

Selon une mise en œuvre, l'étape de délestage consiste à délester complètement un couple prélevé par un compresseur de climatisation et un alternateur ou un alterno-démarreur.

Selon une mise en œuvre, la situation de vie à forte contrainte environnementale est définie par au moins une situation de vie parmi: une situation de roulage à haute altitude, une situation de roulage par très faible ou très forte température, une situation de roulage avec une batterie déchargée, une situation de roulage avec une climatisation réglée au maximum, ou un appel de courant important par des auxiliaires électriques.

Selon une mise en œuvre, une situation de vie à forte contrainte environnementale est définie notamment par rapport à un seuil de l'ordre de 35°C pour les situation de roulage à très forte température, ou un seuil de l'ordre de -10°C pour les situations de roulage à très faible température, ou un seuil de l'ordre de 80kPa pour les situations de roulage à haute altitude (haute altitude qu'on peut aussi comprendre comme au-delà de 2000 m, mais provoquant déjà des contraintes dès 1000 à 1500 m).

Selon une mise en œuvre, la plage de régime dans laquelle se trouvent les courbes de lois de changement de rapport évolue en fonction d'une volonté d'accélération du conducteur.

Selon une mise en œuvre, dans une première plage de volonté d'accélération du conducteur, les courbes de changement de rapport se situent dans une première plage de régime moteur.

Selon une mise en œuvre, la première plage de volonté d'accélération du conducteur correspond à une plage d'enfoncement de la pédale d'accélérateur comprise entre environ 15% et 50% et la première plage de régime moteur est comprise environ entre 2500 tours/min et 3300 tours/min.

Selon une mise en œuvre, dans une deuxième plage de volonté d'accélération du conducteur, les courbes de changement de rapport se situent dans une deuxième plage de régime moteur.

Selon une mise en œuvre, la deuxième plage de volonté d'accélération du conducteur correspond à une plage d'enfoncement de la pédale d'accélérateur comprise entre environ 50% et 100% et la deuxième plage de régime moteur est comprise environ entre 3300 tours/min et 5300 tours/min. On réalise ainsi un pilotage progressif du moteur thermique.

Il s'est avéré que l'invention permettait donc d'obtenir le coupe voulu par le conducteur en cas de fortes contraintes environnementales avec le moins de gêne perçue possible par le conducteur sur les autres fonctionnalités du véhicule obtenues avec les accessoires.

Mais il s'est également avéré, de façon surprenante, qu'on pouvait diminuer le régime du moteur pour obtenir le couple demandé, et qu'on diminuait du même coup la consommation en carburant du moteur : en effet, grâce à l'invention, on diminue la consommation de carburant en adaptant le régime moteur à un niveau de juste nécessaire pour satisfaire au couple demandé. On a ainsi noté que, pour satisfaire un couple donné, l'invention permettait de diminuer de 500 à 1000 tours par minute le régime moteur, toutes choses égales par ailleurs.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique fonctionnelle d'un véhicule automobile à chaîne de transmission pilotée mettant en œuvre le procédé de commande selon la présente invention;
La figure 2 est un graphique représentant le couple fourni par le moteur et les couples prélevés par les différents éléments accouplés au moteur thermique en fonction du régime du moteur thermique pour des températures ambiantes de fonctionnement de l'ordre de 20°C et de 55°C;
La figure 3 est un graphique représentant le couple fourni par le moteur et les couples prélevés par les différents éléments accouplés au moteur en fonction du régime du moteur thermique pour un véhicule mettant en œuvre le procédé selon la présente invention;
Les figures 4a et 4b représentent les lois de passage de changements de rapport respectivement descendants et montants pour une situation de vie normale du véhicule;
Les figures 5a et 5b représentent les lois de passage de changements de rapport respectivement descendants et montants pour une situation de vie à forte contrainte environnementale du véhicule;
La figure 6 est une représentation graphique de la puissance générée par les accessoires en fonction du régime moteur mettant en évidence le gain en puissance obtenu lors de la mise en œuvre du procédé selon l'invention.

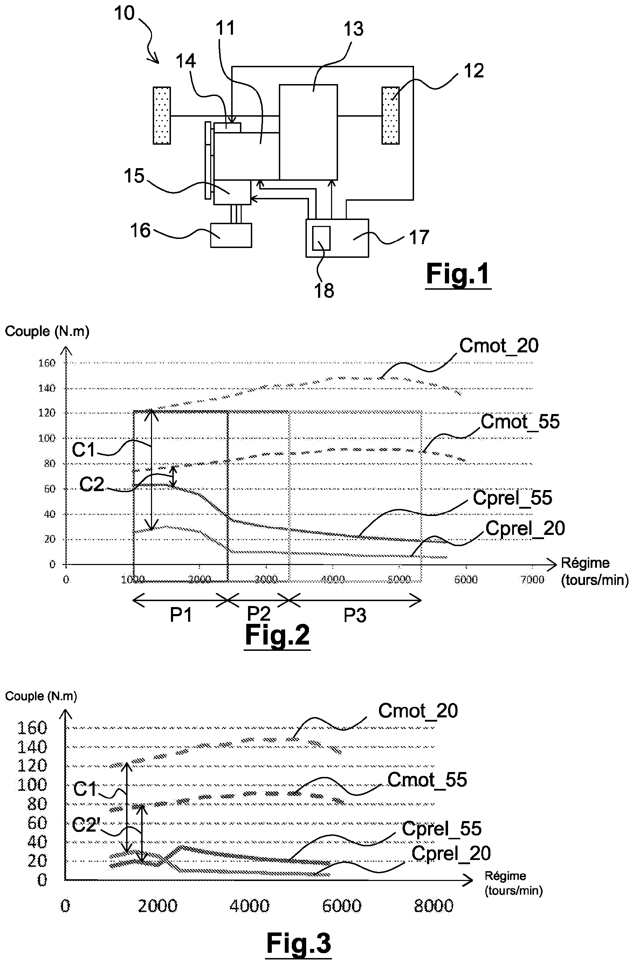

La figure 1 est une représentation schématique fonctionnelle d'un véhicule automobile 10 comportant un moteur thermique 11 entraînant des roues 12 par l'intermédiaire d'une chaîne de transmission pilotée 13.

Dans la présente description, l'expression chaîne de transmission pilotée 13 correspond à tout système de transmission dans lequel les changements de rapport ou de démultiplication sont décidés par un calculateur et réalisés automatiquement sans intervention du conducteur grâce à des actionneurs suivant des lois de changement de rapport de vitesses. A titre d'exemple classique de chaîne de transmission pilotée 13, on peut citer une boîte de vitesses automatique (BVA) qui comprend un convertisseur de couple hydraulique et des trains épicycloïdaux bloqués par des freins hydrauliques pour réaliser les différentes démultiplications, une boîte de vitesses mécanique pilotée (BVMP) qui comprend un embrayage classique mais piloté, ainsi qu'une boîte de vitesses mécanique classique mais dont les fourchettes sont actionnées électriquement ou hydrauliquement, un variateur qui comprend un embrayage humide ou une transmission à variation continue (CVT) comportant un jeu de poulies à diamètres variables reliées par une chaîne permettant d'obtenir une infinité de valeurs de démultiplication. Dans le cas présent, on utilise de préférence une boîte de vitesses automatique (BVA).

En outre, le moteur 11 coopère, par l'intermédiaire d'un système à courroie installé en façade accessoire, avec des accessoires, en l'occurrence constitués par un compresseur de climatisation 14 et un alternateur 15 ou un alterno-démarreur en relation avec une batterie 16. L'alterno-démarreur consiste en une machine électrique tournante réversible pouvant fonctionner en mode générateur pour générer de la puissance électrique, ou en mode moteur pour assurer un démarrage ou un redémarrage du moteur thermique 11. L'alterno-démarreur peut également fonctionner en mode moteur pour fournir le cas échéant une puissance supplémentaire au moteur thermique 11.

Les différents éléments de l'architecture sont contrôlés par un superviseur 17 comportant une mémoire 18 stockant des instructions logicielles pour la mise en œuvre du procédé selon la présente invention décrit plus en détails ci-après.

Comme cela est visible sur la figure 2, le couple C1 disponible pour la traction à une température ambiante de l'ordre de 20°C correspond à l'écart entre la courbe Cmot_20 représentant le couple produit par le moteur 11 à une température de l'ordre de 20°C et la courbe Cprel_20 correspondant au prélèvement total de couple au moteur 11 (par les accessoires ainsi qu'à cause des pertes de la boîte de vitesses automatique).

Par ailleurs, le couple C2 disponible pour la traction à une température ambiante de l'ordre de 55°C correspond à l'écart entre la courbe Cmot_55 représentant le couple produit par le moteur 11 à une température de l'ordre de 55°C et la courbe Cprel_55 correspondant au prélèvement total de couple au moteur 11 à une température de l'ordre de 55°C.

La différence entre les couples disponibles C1 et C2 est particulièrement importante dans une plage P1 de faible régime comprise entre 1000 et 2500 tours/min.

En conséquence, lorsque le moteur thermique 11 fonctionne dans cette plage de régime P1 pour une température ambiante élevée et que le couple demandé par le conducteur est supérieur au couple disponible C2 pour la traction du véhicule 10, le superviseur 17 commande le délestage d'au moins une partie d'un couple prélevé par les accessoires 14, 15. Le délestage est réalisé en fonction du couple demandé. Ainsi, il sera possible de délester uniquement le couple pour une partie des accessoires si cela suffit à atteindre le couple demandé, ou pour l'ensemble des accessoires afin d'obtenir le maximum de couple de traction possible.

Comme cela est visible sur la figure 3, le délestage simultané et complet de l'alternateur 15 et du compresseur de climatisation 14 permet d'obtenir un couple disponible C2' trois fois supérieur au couple obtenu sans délestage (60N.m pour C2' contre 20N.m pour C2) dans la plage comprise entre 1000 et 2500 tours/min. L'invention permet ainsi de conférer du dynamisme au véhicule 10 dans les plages de faible régime.

Afin de compenser l'impact négatif des délestages en couple sur les régimes faibles, le superviseur 17 commande ensuite un décalage des courbes de loi de changement de rapport vers des régimes supérieurs aux régimes des courbes de lois de changements de rapport appliquées dans une situation de vie normale du véhicule 10.

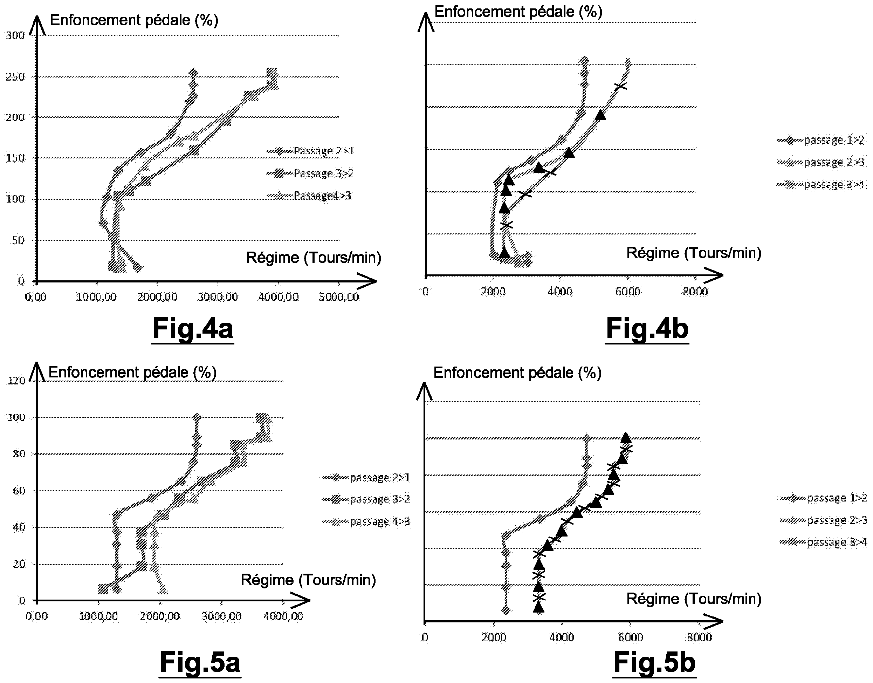

Ainsi, par rapport aux courbes de loi de changement de rapport appliquées dans des situations de vie normales du véhicule 10 (c'est-à-dire lorsque le ou les seuils définissant les situations de vie à forte contrainte environnementale ne sont pas dépassés - cf. figure 4a et 4b), les courbes de loi de changement de rapport appliquées dans des situations de vie à forte contrainte environnementale sont décalées vers de plus haut régimes (cf. figures 5a et 5b).

De préférence, la plage de régime moteur dans laquelle se trouvent les courbes de lois de changement de rapport évolue en fonction d'une volonté d'accélération du conducteur. La volonté d'accélération se traduit par l'enfoncement d'une pédale d'accélérateur du véhicule 10 exprimé en pourcents. En variante, la pédale d'accélérateur pourra bien entendu être remplacée par tout autre moyen de commande, telle qu'une manette, retranscrivant la volonté d'accélération du conducteur suite à son activation.

En l'occurrence, dans une plage de volonté d'accélération du conducteur correspondant à une plage d'enfoncement de la pédale d'accélérateur comprise entre environ 15% et 50%, les courbes de changement de rapport se situent dans une première plage de régime P2 comprise environ entre 2500 tours/min et 3300 tours/min.

Dans une deuxième plage de volonté d'accélération du conducteur correspondant à une plage d'appui de la pédale d'accélérateur comprise entre environ 50% et 100%, les courbes de changement de rapport se situent dans une deuxième plage de régime P3 comprise environ entre 3300 tours/min et 5300 tours/min.

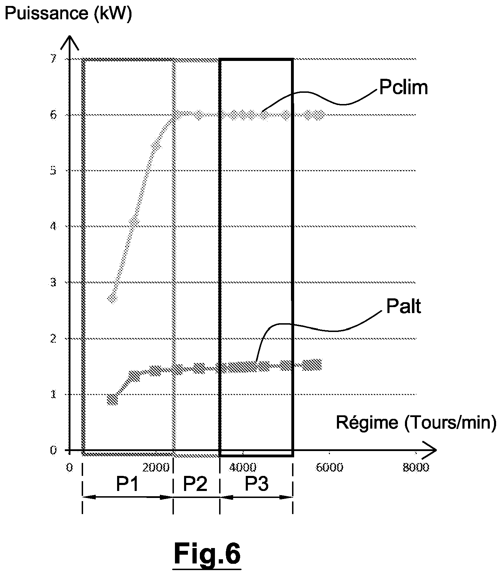

Le superviseur 17 permet ainsi de piloter les changements de rapport de manière à balayer les plages de régimes les plus favorables à la fourniture de puissance électrique et frigorique afin de compenser les délestages préalables. En effet, comme cela est représenté sur la figure 6, la puissance générée par le climatiseur 14 et l'alternateur 15 augmente de manière substantielle avec l'augmentation du régime moteur. On obtient ainsi un gain de puissance de l'ordre de 50% pour la climatisation (cf. courbe Pclim) et de 25% pour l'alternateur (cf. courbe Palt) dans les plages de régime P2 et P3.

La mise en œuvre de l'invention a été décrite pour une situation de roulage à forte contrainte environnementale constituée par un roulage à température extérieure élevée.

De manière plus générique, la situation de vie à forte contrainte environnementale pourra être définie pour une situation de roulage en haute altitude, par très faible ou très forte température, avec une batterie déchargée, avec une climatisation réglée au maximum, ou pour un appel de courant important par des auxiliaires électriques de forte puissance, tels qu'un groupe moto-ventilateur, un pare-brise chauffant, ou un volant chauffant par exemple.

Chaque situation de vie est définie par rapport à un seuil. La situation de vie est considérée comme normale tant que la grandeur physique correspondante (température, altitude, niveau de réglage de la climatisation, niveau de courant) ne dépasse par le seuil. La situation de vie est considérée comme une situation de vie à forte contrainte environnementale lorsque la grandeur physique dépasse le seuil considéré.

On pourra notamment retenir un seuil par exemple de l'ordre de 35°C pour les roulages à haute température, un seuil par exemple de l'ordre de -10°C pour les roulages à basse température, ou un seuil de pression atmosphérique de l'ordre de 80kPa pour les roulages à haute altitude.

## Revendications

1. Procédé de commande d'une transmission de véhicule automobile (10) comportant:
- un moteur thermique (11) entraînant des roues (12) dudit véhicule (10) par une chaîne de transmission pilotée (13), et
- des accessoires (14, 15) prélevant un couple audit moteur thermique (11), **caractérisé en ce que** ledit procédé comporte:
- une étape de délestage d'au moins une partie d'un couple prélevé par lesdits accessoires (14, 15) lors d'un fonctionnement dans une situation de vie à forte contrainte environnementale, et ensuite
- une étape de décalage de courbes de loi de changement de rapport vers des régimes supérieurs aux régimes des courbes de loi de changement de rapport appliquées dans une situation de vie normale dudit véhicule automobile (10).

2. Procédé selon la revendication 1, **caractérisé en ce que** l'étape de délestage est mise en œuvre dans une plage de faible régime (P1) lorsqu'un couple demandé par un conducteur est supérieur à un couple disponible pour assurer une traction dudit véhicule automobile (10).

3. Procédé selon la revendication 1 ou 2, **caractérisé en ce que** l'étape de délestage consiste à délester complètement un couple prélevé par un compresseur de climatisation (14) et un alternateur (15) ou un alterno-démarreur.

4. Procédé selon l'une quelconque de revendications 1 à 3, **caractérisé en ce que** la situation de vie à forte contrainte environnementale est définie par au moins une situation de vie parmi: une situation de roulage à haute altitude, une situation de roulage par très faible ou très forte température, une situation de roulage avec une batterie déchargée, une situation de roulage avec une climatisation réglée au maximum, ou un appel de courant important par des auxiliaires électriques.

5. Procédé selon la revendication 4, **caractérisé en ce qu'**une situation de vie à forte contrainte environnementale est définie notamment par rapport à un seuil de l'ordre de 35°C pour les situation de roulage à très forte température, ou un seuil de l'ordre de -10°C pour les situations de roulage à très faible température, ou un seuil de l'ordre de 80kPa pour les situations de roulage à haute altitude.

6. Procédé selon l'une quelconque des revendications 1 à 5, **caractérisé en ce que** la plage de régime (P2, P3) dans laquelle se trouvent les courbes de lois de changement de rapport évolue en fonction d'une volonté d'accélération du conducteur.

7. Procédé selon l'une quelconque des revendications 1 à 6, **caractérisé en ce que** dans une première plage de volonté d'accélération du conducteur, les courbes de changement de rapport se situent dans une première plage de régime moteur (P2).

8. Procédé selon la revendication 7, **caractérisé en ce que** la première plage de volonté d'accélération du conducteur correspond à une plage d'enfoncement de la pédale d'accélérateur comprise entre environ 15% et 50% et la première plage de régime moteur (P2) est comprise environ entre 2500 tours/min et 3300 tours/min.

9. Procédé selon la revendication 7 ou 8, **caractérisé en ce que** dans une deuxième plage de volonté d'accélération du conducteur, les courbes de changement de rapport se situent dans une deuxième plage de régime moteur (P3).

10. Procédé selon la revendication 9, **caractérisé en ce que** la deuxième plage de volonté d'accélération du conducteur correspond à une plage d'enfoncement de la pédale d'accélérateur comprise entre environ 50% et 100% et la deuxième plage de régime moteur (P3) est comprise environ entre 3300 tours/min et 5300 tours/min.

## Patentansprüche

1. Verfahren zum Steuern eines Kraftfahrzeuggetriebes (10), umfassend :
- eine Wärmekraftmaschine (11), die die Räder (12) des Fahrzeugs (10) durch eine gesteuerte Übertragungskette (13) antreibt, und
- Zubehör (14, 15), das ein Drehmoment von der Wärmekraftmaschine (11) aufnimmt, **dadurch gekennzeichnet, dass** das Verfahren umfasst:
- ein Schritt, bei dem mindestens ein Teil des von dem Zubehör (14, 15) während des Betriebs in einer Lebenssituation mit hoher Umweltbelastung aufgenommenen Drehmoments abgebaut wird, und dann
- ein Schritt des Verschiebens der Verhältnisänderungsgesetzkurven auf Geschwindigkeiten, die größer sind als die Geschwindigkeiten der Verhältnisänderungsgesetzkurven, die in einer normalen Lebenssituation des Kraftfahrzeugs (10) angewendet werden.

2. Verfahren nach Anspruch 1, **dadurch gekennzeichnet, daß** der Schritt des Entladens in einem niedrigen Drehzahlbereich durchgeführt wird (P1), wenn ein Drehmoment von einem Fahrer angeforderten größer ist als ein Drehmoment zur Verfügung zu stellen Traktion des Fahrzeugs. Automotive (10) aufweist.

3. Verfahren nach Anspruch 1 oder 2, **dadurch gekennzeichnet, dass** der Schritt des Lastabwurfs besteht darin vollständig ein Drehmoment von einem Klimaanlagenkompressor (14) und einem Wechselstromgenerator (15) oder einem Generator-Starter genommen entlastet.

4. Verfahren nach einem der Ansprüche 1 bis 3, das **dadurch gekennzeichnet ist, dass** die Lebenssituation mit hoher Umweltbelastung durch mindestens eine Lebenssituation definiert ist unter: einer Situation des Rollens in großer Höhe, einer Situation des Rollens durch sehr gering oder sehr hohe Temperatur, eine Fahrsituation mit entladener Batterie, eine Fahrsituation mit maximal eingestellter Klimaanlage oder eine hohe Stromaufnahme durch elektrische Hilfsgeräte.

5. Verfahren nach Anspruch 4, **dadurch gekennzeichnet, dass** eine Lebenssituation mit hohen Umweltbelastung ist insbesondere definiert in Bezug auf eine Schwelle in der Größenordnung von 35°C für Situationen, bei sehr hohen Temperatur Fahren oder eine Schwelle, um -10°C für Fahrsituationen bei sehr niedrigen Temperaturen oder einen Schwellenwert in der Größenordnung von 80 kPa für Fahrsituationen in großer Höhe.

6. Verfahren nach einem der Ansprüche 1 bis 5, **dadurch gekennzeichnet, dass** der Drehzahlbereich (P2, P3), in dem sich die Kurven der Gesetze der Änderung des Verhältnisses entwickelt sich nach dem Wunsch nach Beschleunigung des Fahrers.

7. Verfahren nach einem der Ansprüche 1 bis 6, **gekennzeichnet dadurch, dass** in einem ersten Bereich des Wunsches nach Beschleunigung des Fahrers die Verhältnisänderungskurven in einem ersten Bereich der Motordrehzahl (P2) liegen.

8. Verfahren nach Anspruch 7, dass der erste Bereich des Fahrerbeschleunigungs Wunsch entspricht einem Bereich des Niederdrückens des Gaspedals zwischen etwa 15% und 50% und dem ersten Bereich der Motordrehzahl gekennzeichnet. (P2) zwischen etwa 2500 Umdrehungen / min und 3300 Umdrehungen / min.

9. Verfahren nach Anspruch 7 oder 8, dadurch, dass in einem zweiten Bereich von Fahrerbeschleunigungs Wunsch gekennzeichnet, daß die Übersetzungsänderungskurven in einem zweiten Bereich von Motordrehzahl (P3) befindet.

10. Verfahren nach Anspruch 9, **dadurch gekennzeichnet, daß** der zweite Bereich des Beschleunigungs Wunsch des Fahrers entspricht einem Bereich des Niederdrückens des Gaspedals zwischen etwa 50% und 100% und der zweite Bereich der Motordrehzahl (P3) annähernd zwischen 3300 Umdrehungen / min und 5300 Umdrehungen / min.

## Claims

1. A method of controlling a motor vehicle transmission (10) comprising :
- a heat engine (11) driving the wheels (12) of said vehicle (10) by a controlled transmission chain (13), and
- accessories (14, 15) taking a torque from said heat engine (11),
**characterized in that** said method comprises :
- a step of shedding at least part of a torque taken by said accessories (14, 15) during operation in a life situation with high environmental stress, and then
- a step of shifting the ratio change law curves to speeds greater than the speeds of the ratio change law curves applied in a normal life situation of said motor vehicle (10).

2. Method according to claim 1, **characterized in that** the step of unloading is implemented in a low speed range (P1) when a torque requested by a driver is greater than a torque available to provide
traction of said vehicle. automotive (10).

3. Method according to claim 1 or 2, **characterized in that** the step of load shedding consists in completely relieving a torque taken by an air conditioning compressor (14) and an alternator (15) or an alternator-starter.

4. Method according to any one of claims 1 to 3, **characterized in that** the life situation with high environmental stress is defined by at least one life situation among: a situation of rolling at high altitude, a situation of rolling by very low or very high temperature, a driving situation with a discharged battery, a driving situation with air conditioning set to maximum, or a high current draw by electrical auxiliaries.

5. Method according to claim 4, **characterized in that** a life situation with high environmental stress is defined in particular with respect to a threshold of the order of 35°C for driving situations at very high temperature , or a order threshold -10°C for driving situations in very low temperature, or a threshold of the order of 80kPa for high altitude driving situations.

6. Method according to any one of claims 1 to 5, **characterized in that** the speed range (P2, P3) in which are the curves of the laws of change of ratio evolves according to a desire for acceleration of the driver.

7. Method according to any one of claims 1 to 6, **characterized in that** in a first range of desire for acceleration of the driver, the ratio change curves are located in a first range of engine speed (P2).

8. Method according to claim 7, **characterized in that** the first range of driver's acceleration desire corresponds to a range of depression of the accelerator pedal between approximately 15% and 50% and the first range of engine speed. (P2) is between approximately 2500 revolutions / min and 3300 revolutions / min.

9. Method according to claim 7 or 8, **characterized in that** in a second range of driver acceleration desire, the ratio change curves are located in a second range of engine speed (P3).

10. Method according to claim 9, **characterized in that** the second range of acceleration desire of the driver corresponds to a range of depression of the accelerator pedal between approximately 50% and 100% and the second range of engine speed (P3) is approximately between 3300 revolutions / min and 5300 revolutions / min.
